# EUROPÄISCHE PATENTSCHRIFT

(11) **EP 1 749 843 B1**
(45) Veröffentlichungstag und Bekanntmachung des Hinweises auf die Patenterteilung: **29.06.2016**
(21) Anmeldenummer: 06450107.5
(22) Anmeldetag: 26.07.2006
(51) Int. Cl.: C08F 10/06, C08L 23/14, F16L 9/00

(54) **Verfahren zum Herstellen eines Leitungsrohres**
Process for preparing pipes
Procédé pour la préparation de tuyaux

(30) Priorität: 01.08.2005 AT 12892005
(43) Veröffentlichungstag der Anmeldung: 07.02.2007
(73) Patentinhaber: KE KELIT Kunststoffwerk Gesellschaft m.b.H., 4020 Linz (AT)
(72) Erfinder: Rametsteiner, Karl, 4040 Linz (AT)
(74) Vertreter: Patentanwaltskanzlei Hübscher

(56) Entgegenhaltungen:
- EP-A- 1 260 546
- EP-A- 1 260 547
- EP-A- 1 312 623
- WO-A-99/40151

## Beschreibung

Die Erfindung bezieht sich auf ein Verfahren zum Herstellen eines Leitungsrohres mit einem Rohrkörper aus einem überwiegend in hexagonaler β-Form kristallisierten Polypropylen, wobei der Rohrkörper aus der mit einem β-Nukleierungsmittel versetzten Polypropylenschmelze extrudiert und im Anschluss an die Extrusion kalibriert und gekühlt wird.

Polypropylen kristallisiert beim Abkühlen aus der Schmelze überwiegend in einer monoklinen α-Form, es sei denn, es werden Nukleierungsmittel zugesetzt, die eine Kristallisation überwiegend in einer hexagonalen β-Form erzwingen. Während die monokline α-Kristallisationsform eine höhere Steifigkeit und einen höheren Schmelzpunkt des Werkstoffes mit sich bringt, kann durch eine Kristallisation in der hexagonalen β-Form die Schlagzähigkeit und die Spannungsrissbeständigkeit erhöht werden, was für Druckrohre zum Leiten von Gasen oder Flüssigkeiten vorteilhaft genützt werden kann (WO 03/042260 A1, WO 99/40151 A1). Zur Verbesserung der Steifigkeit solcher Leitungsrohre mit erhöhter Schlagzähigkeit wurde außerdem vorgeschlagen (EP 1 260 546 A1), den Rohrkörper aus wenigstens zwei Lagen einerseits aus einem in hexagonaler β-Form kristallisierten Polypropylen und anderseits aus einem überwiegend in monokliner α-Form kristallisierten Polypropylen aufzubauen, wobei die Lagen in bekannter Weise gemeinsam aus entsprechenden Polypropylenschmelzen extrudiert werden. Die in hexagonaler β-Form kristallisierte Polypropylenlage bildet dabei stets einen Außenmantel des Leitungsrohres. Solche Außenmäntel aus einem in hexagonaler β-Form kristallisierten Polypropylen kann auch bei Stahlrohren zur Erhöhung der Risszähigkeit bei der Rohrhandhabung eingesetzt werden (EP 1 260 547 A1).

Leitungsrohre aus Polypropylen werden üblicherweise aus der Schmelze extrudiert und im Anschluss an die Extrusion kalibriert und mit Hilfe von Wasser gekühlt, wobei das Leitungsrohr in einem Kühltank durch Kalibrierblenden gezogen wird. Ein Unterdruck im Kalibriertank verhindert dabei das Einfallen des noch nicht erstarrten Rohres. Da bei Anwesenheit geeigneter Nukleierungsmittel die Kristallisation des Polypropylens in der hexagonalen β-Form bei vergleichsweise hohen Temperaturen erfolgt, das extrudierte Leitungsrohr aber im Hinblick auf die für den Rohrabzug erforderliche Erstarrung zumindest einer Außenschicht rasch abgekühlt werden soll, besteht die Gefahr, dass die Kristallisation des Polypropylens in der hexagonalen β-Form bei einer Vergrößerung des Anteils der monoklinen α-Kristallisationsform für die angestrebte Schlagfestigkeit bzw. Spannungsrissbeständigkeit des Leitungsrohres unzureichend ist. Eine Verringerung der Abkühlrate kann zwar die Kristallisation in der hexagonalen β-Form verbessern, doch steht eine solche Verminderung der Abkühlrate einer höheren Produktionsgeschwindigkeit entgegen, ohne eine über die Wanddicke des Leitungsrohres durchgehende Kristallisation in der hexagonalen β-Form sicherstellen zu können.

Der Erfindung liegt somit die Aufgabe zugrunde, ein Verfahren zum Herstellen eines Leitungsrohres der eingangs geschilderten Art so auszugestalten, daß ein Rohrkörper aus einem überwiegend in hexagonaler β-Form kristallisierten Polypropylen extrudiert werden kann, ohne in nachteiliger Weise in die Kühlung und Kalibrierung des extrudierten Leitungsrohres eingreifen zu müssen.

Die Erfindung löst die gestellte Aufgabe dadurch, dass der Rohrkörper gemeinsam mit einem ihn umschließenden Mantel aus einem überwiegend in monokliner α-Form kristallisierenden Polypropylen extrudiert, kalibriert und gekühlt wird.

Durch das Coextrudieren des Rohrkörpers mit einem Mantel aus einem überwiegend in monokliner α-Form kristallisierenden Polypropylen kann trotz einer intensiven Kühlung während der Kalibrierung die für eine Kristallisation in der hexagonalen β-Form erforderliche Temperatur im Bereich des Rohrkörpers über eine ausreichende Zeitspanne aufrecht erhalten werden, um das mit einem entsprechenden Nukleierungsmittel versetzte Polypropylen des Rohrkörpers in der hexagonalen β-Form zu kristallisieren. Obwohl der Mantel bereits von der Außenseite her erstarrt, kann die im Bereich des Mantels frei werdende Kristallisationswärme zur Aufrechterhaltung der Kristallisationswärme im Bereich des inneren Rohrkörpers genützt werden. Aufgrund der Erstarrung des Mantels aus einem bezüglich der Kristallisation unempfindlichen Polypropylen mit einer monoklinen α-Kristallisationsform kann die Kalibrierung in einer für extrudierte Leitungsrohre herkömmlichen Art ohne Einschränkung der Produktionsgeschwindigkeit vorgenommen werden. Die Zusammenführung der Schmelzen für den Rohrkörper und den Mantel vor dem Austritt des Rohrstranges aus der formgebenden Extrusionsdüse bringt eine unlösbare Verschweißung des Rohrkörpers mit dem Mantel mit sich, sodass die durch die hexagonale β-Kristallisationsform bestimmten Eigenschaften des Polypropylens, beispielsweise die erhöhte Spannungsrissbeständigkeit gegenüber dem den Rohrkörper durchströmenden Medium, ohne Einschränkung genützt werden können. Der Verbund zwischen dem Rohrkörper mit einer überwiegenden Kristallstruktur in einer hexagonalen β-Form und dem Mantel, der eine monokline α-Kristallisationsform aufweist, bietet darüber hinaus den Vorteil, dass unterschiedliche Werkstoffeigenschaften des Rohrkörpers und des Mantels zur Anpassung an unterschiedliche Anforderungen eingestellt werden können.

Leitungsrohre sind für verschiedene Medien farblich unterschiedlich zu kennzeichnen. Da nur bestimmte Farbpigmente eine β-Nukleierung des Polypropylens nicht beeinträchtigen, bietet der den Rohrkörper umschließende Mantel aus einem überwiegend in monokliner α-Form kristallisierten Polypropylen die einfache Möglichkeit, das Leitungsrohr entsprechend einzufärben. Werden dem Polypropylen des Mantels diesen vom Rohrkörper farblich unterscheidende Farbpigmente zugemischt, so kann der Rohrkörper des Leitungsrohres vom Mantel auch optisch unterschieden werden. Damit für das Leitungsrohr vorteilhafte mechanische Eigenschaften sichergestellt werden können, kann der Rohrkörper aus β-nukleiertem Polypropylen-Random-Copolymerisat (PP-R) oder Polypropylen-Random-Copolymerisat mit erhöhter Druckbeständigkeit (PP-RCT) extrudiert werden. In diesem Fall kann für den Mantel vorzugsweise ein Polypropylen-Random-Copolymerisat (PP-R) oder ein Polypropylen-Block-Copolymerisat (PP-B) eingesetzt werden. Die Eigenschaften des Rohrkörpers und des Mantels können durch entsprechende Zusätze in an sich bekannter Weise an die jeweiligen Anforderungen angepasst werden, wobei sich der Rohrkörper und der Mantel für unterschiedliche Bedingungen ausrüsten lassen. So kann der Mantel beispielsweise eine erhöhte Licht- und UV-Beständigkeit durch die Beigabe von Stabilisatoren erhalten, die sonst die β-Nukleierung des Rohrkörpers beeinträchtigen würden. Der Rohrkörper könnte wiederum mit einer bioziden Ausrüstung zur Vermeidung eines Biofilmes oder einer Bakterien- oder Pilzkontamination versehen werden, und zwar immer unter der Voraussetzung, dass die hiefür eingesetzten Zusatzstoffe die β-Nukleierung nicht beeinträchtigen. Es braucht wohl nicht näher hervorgehoben zu werden, dass sowohl der Rohrkörper als auch der Mantel im Bedarfsfall zur Einstellung bestimmter Werkstoffeigenschaften mehrschichtig ausgebildet werden können.

### Beispiel 1:

Ein Rohrkörper aus einem Polypropylen-Random-Copolymerisat mit erhöhter Druckbeständigkeit (PP-RCT) mit einem Außendurchmesser von 19 mm und einer Wanddicke von 1,8 mm, was einem Durchmesser-Wanddicken-Verhältnis SDR von 11 gemäß ÖNORM B 5174 entspricht, wurde mit einem Mantel aus einem Polypropylen-Random-Copolymerisat (PP-R) mit einem Schmelzindex MFI 190/5 von 0,3 in einer Coextrusionsanlage extrudiert. Der Mantel hatte einen Außendurchmesser von 20 mm und eine Dicke von 1 mm, sodass das hergestellte Leitungsrohr ein Endmaß von 20 x 2,8 mm und ein Durchmesser-Wanddicken-Verhältnis SDR von 7,4 aufwies. Während die Schmelze des Rohrkörpers mit einem üblichen β-Nukleierungsmittel versetzt wurde, und daher in einer hexagonalen β-Form kristallisierte, wies der Mantel eine monokline α-Kristallisationsform auf. Das coextrudierte Leitungsrohr wurde in seiner Produktionsgeschwindigkeit von 15-20 m/min durch einen Kühl- und Kalibriertank gezogen, der mit Kühlwasser beaufschlagt wurde, das eine Temperatur von 15-20 °C aufwies. Die Analyse des auf diese Weise hergestellten Leitungsrohres zeigte, daß der Rohrkörper eine hexagonale β-Kristallisationsform ohne erkennbare Störungen des Kristallgefüges aufwies. Die Kälteschlagfestigkeit des Leitungsrohres entsprach bis -5 °C den Anforderungen. Der Verbundkörper aus dem Rohrkörper und dem Mantel zeigte im Zeitstands-Innendruckversuch gemäß ÖNORM B 5174 die typischen Eigenschaften eines Rohres aus PP-R mit einem Durchmesser-Wanddicken-Verhältnis SDR von 7,4.

### Beispiel 2:

Es wurde ein Leitungsrohr gemäß dem Beispiel 1 hergestellt, allerdings mit dem Unterschied, daß der Mantel aus einem Polypropylen-Block-Copolymerisat mit einem Schmelzindex MFI 190/5 von 0,4 und einem E-Modul von 1600 N/mm² extrudiert wurde. Das erhaltene Leitungsrohr wies bei sonst vergleichbaren Messwerten eine zulässige Kälteschlagfestigkeit bis -20 °C auf.

### Beispiel 3:

Es wurde ein Leitungsrohr entsprechend dem Beispiel 1 hergestellt, jedoch wurden der Schmelze für den Rohrkörper Chlorstabilisatoren zugemischt. Der Mantel wurde zusätzlich mit UV-Stabilisatoren aus einem sterisch gehinderten Amin (HALS) sowie mit Phthalocyaninblau-Pigmenten versetzt. Es wurde ein Leitungsrohr mit einem blau eingefärbten Mantel erhalten, das UV-beständig ist. Da der Rohrkörper aufgrund der Zugaben eine entsprechende Beständigkeit gegenüber Chlor aufweist, eignet sich das erhaltene Leitungsrohr insbesondere für die Leitung von Trinkwasser in sonnenreichen Gebieten.

## Patentansprüche

1. Verfahren zum Herstellen eines Leitungsrohres mit einem Rohrkörper aus einem überwiegend in hexagonaler β-Form kristallisierten Polypropylen, wobei der Rohrkörper aus der mit einem β-Nukleierungsmittel versetzten Polypropylenschmelze extrudiert und im Anschluß an die Extrusion kalibriert und gekühlt wird, **dadurch gekennzeichnet, daß** der Rohrkörper gemeinsam mit einem ihn umschließenden Mantel aus einem überwiegend in monokliner α-Form kristallisierenden Polypropylen extrudiert, kalibriert und gekühlt wird.

2. Verfahren nach Anspruch 1, **dadurch gekennzeichnet, daß** dem Polypropylen des Mantels diesen vom Rohrkörper farblich unterscheidende Farbpigmente zugemischt werden.

3. Verfahren nach Anspruch 1 oder 2, **dadurch gekennzeichnet, daß** der Rohrkörper aus β-nukleiertem Polypropylen-Random-Copolymerisat (PP-R) extrudiert wird.

4. Verfahren nach einem der Ansprüche 1 bis 3, **dadurch gekennzeichnet, daß** der Mantel aus einem Polypropylen-Random-Copolymerisat (PP-R) oder einem Polypropylen-Block-Copolymerisat (PPB) extrudiert wird.

## Claims

1. Method for producing a conduit having a tubular body consisting of a polypropylene which is crystallised predominantly in hexagonal β form, wherein the tubular body is extruded from the polypropylene melt, which has a β nucleating agent added thereto, and, subsequent to the extrusion, is calibrated and cooled, **characterised in that** the tubular body, together with a sheath surrounding it, is extruded from a polypropylene which is crystallised predominately in monoclinic α form, calibrated and cooled.

2. Method as claimed in claim 1, **characterised in that** dye pigments which distinguish the sheath from the tubular body in terms of colour are admixed to the polypropylene of the sheath.

3. Method as claimed in claim 1 or 2, **characterised in that** the tubular body is extruded from β-nucleated polypropylene random copolymer (PP-R).

4. Method as claimed in any one of claims 1 to 3, **characterised in that** the sheath is extruded from a polypropylene random copolymer (PP-R) or a polypropylene block copolymer (PP-B).

## Revendications

1. Procédé de préparation d'un tuyau avec un corps tubulaire à partir d'un polypropylène en majorité cristallisé de forme bêta hexagonale, le corps tubulaire étant extrudé à partir de la fusion de polypropylène mélangée à un agent de nucléation bêta, calibré ensuite au niveau de l'extrusion et refroidi, **caractérisé en ce que** le corps tubulaire est extrudé conjointement avec un revêtement, l'enveloppant, constitué en majorité de polypropylène cristallisant de forme alpha monoclinale, calibré et refroidi.

2. Procédé selon la revendication 1, **caractérisé en ce que** sont mélangés au polypropylène du revêtement des pigments colorés différenciant de manière colorée celui-ci du corps tubulaire.

3. Procédé selon la revendication 1 ou 2, **caractérisé en ce que** le corps tubulaire est extrudé à partir de copolymère aléatoire de polypropylène (PP-R) bêta-nucléé.

4. Procédé selon l'une des revendications 1 à 3, **caractérisé en ce que** le revêtement est extrudé à partir d'un copolymère aléatoire de polypropylène (PP-R) ou d'un copolymère de polypropylène en bloc (PPB).
